# EUROPÄISCHE PATENTSCHRIFT

(11) **EP 0 760 372 B1**
(45) Veröffentlichungstag und Bekanntmachung des Hinweises auf die Patenterteilung: **02.05.2003**
(21) Anmeldenummer: 96110261.3
(22) Anmeldetag: 26.06.1996
(51) Int. Cl.: C07F 7/18, C03C 25/00

(54) **Wasser-haltige Auflösungen von Acryl-funktionalisierten Organosilanen**
Water containing solutions of acryl-functional organosilanes
Solutions d'organosilanes à fonction acrylique contenant de l'eau

(30) Priorität: 24.08.1995 DE 19531144
(43) Veröffentlichungstag der Anmeldung: 05.03.1997
(73) Patentinhaber: Degussa AG, 40474 Düsseldorf (DE)
(72) Erfinder: Haas, Margret, 53639 Königswinter (DE); Bernhardt, Günther, Dr., 53757 St. Augustin (DE); Matthes, Reinhard, Dr., 51427 Bergisch Gladbach (DE)

(56) Entgegenhaltungen:
- EP-A- 0 340 816
- GB-A- 949 126

## Beschreibung

Die vorliegende Erfindung betrifft Wasser-haltige Auflösungen von Acryl-funktionalisierten Organosilanen der allgemeinen Formel I 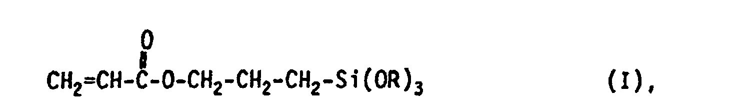 worin R eine Methyl- oder Ethylgruppe darstellt, ein Verfahren zu deren Herstellung sowie deren Verwendung, u. a. für Überzüge, Oberflächen oder Zwischenschichten.

In GB 949 126 sowie DE-AS 1 270 716 werden wäßrige Lösungen von Methacryloxy- und Acryloxyalkyltrialkoxysilanen beschrieben. Die Konzentrationen der Organosilanole und -siloxanole in den wäßrigen Lösungen gemäß DE-AS 1270716 werden mit rund 0,1 bis 10 Gew.-% angegeben. Insbesondere wird ihre Verwendung zur Behandlung von Glasfasern oder daraus hergestellter Fasergebilde wie Rovings, Geweben oder Vliesen aufgeführt. Es werden sowohl verdünnte Lösungen von 0,25 bis 1,5 Gew.-% Organosilan zur Erzeugung von Finishes auf schlichtefreien Geweben oder Rovings als auch 5 bis 10 Gew.-%ige Lösungen zum Schlichten von frischgesponnenen Glasfasern beschrieben.

Aus verdünnten Lösungen werden dabei im Tauchverfahren auf der Glasfaser monomolekulare oder mehrlagige Schichten (Finishes) abgeschieden, die mit Si-OH-Gruppierungen auf der Faseroberfläche unter Ausbildung von Siloxanbindungen haftfest verankert werden.

In konzentrierterer Form angewandte Lösungen mit 5 bis 10 Gew.-%, die beispielsweise zur Glasfaserbehandlung nach dem Spinnvorgang verwendet werden, wobei man die Fasern über Walzen, sich bewegende Bänder oder Kissen zieht, die mit der Behandlungslösung getränkt sind, führen zu einer Filmbildung (Schlichte), die sowohl die Verarbeitungseigenschaften, wie die Gleitfähigkeit der Faser, ihre Zwirnung zu Fäden, Strängen oder Vorgespinsten, als auch die späteren Produkteigenschaften positiv beeinflussen kann.

Die über die Siloxanbindung auf der Faseroberfläche fest verankerten Silanmoleküle vermögen mittels der Doppelbindung der Acryl- bzw. Methacryl. funktion des organischen Restes mit anderen Doppelbindungen ungesättigter Harzsysteme zu copolymerisieren, wobei nach Aushärtung der Harze eine haftfeste Einbindung in die kohärente Phase oder Harzmatrix erfolgt.

Durch den über das Organosilan an der Phasengrenze zwischen Glasfasern oder aus diesen gefertigten Gebilden und der sie umgebenden Matrix hergestellten Verbund können völlig neue Eigenschaftsbilder der verwendeten Harze erreicht werden, wie z. B. verbesserte mechanische Festigkeiten, verbesserte elektrische Eigenschaften und verbesserter Schutz gegen Eindringen von Feuchtigkeit.

Es ist aber ein Mangel, daß Lösungen auf der Basis von 3-Methacryloxypropyltrialkoxysilanen nur eine begrenzte Haltbarkeit haben. Ferner sind aus GB 949 126 und DE-AS 1 270 716 nur solche wäßrigen Lösungen auf Basis 3-Methacryloxy- bzw. Acryloxyalkyltrialkoxysilan bekannt, für deren Herstellung bis rund 10 Gew-% Organosilan eingesetzt wurde. In Beispiel 1 der DE-AS 1 270 716 wurde durch leichtes Schütteln von 1 Teil Acryloxypropyltrimethoxysilan mit 20 Teilen einer 0,1 %igen Essigsäure ein homogenes Hydrolysat hergestellt und nachfolgend durch Zugabe von 179 Teilen Wasser auf eine 0,5 %ige Lösung verdünnt.

Die Haltbarkeit solcher Lösungen wird im folgenden auch als Standzeit bezeichnet. So trüben z. B. 0,1 bis 1 Gew.-%ige wäßrige 3-Methacryloxypropyltrimethoxysilan-Lösungen schon nach 2 Tagen. Mit steigender Organosilankonzentration wird die Standzeit drastisch verkürzt und beträgt bei einer 10 Gew.-%igen wäßrigen Lösung noch rund 15 Stunden. Aus zunächst vorliegenden monomeren bzw. oligomeren Organosilanolen bilden sich mit zunehmender Standzeit cyclische sowie lineare Polykondensate aus. Mit weiter wachsender Kettenlänge wird auch die Löslichkeitskonzentration der Polykondensate überschritten. So tritt zunächst eine Trübung der Lösung ein und schließlich erfolgt die Ausflockung. Trübe und ausgeflockte Lösungen sind zur Behandlung von Glasfasern oder daraus hergestellten Geweben unbrauchbar.

Bei technischen und hier insbesondere kontinuierlichen Abläufen, wie z. B. beim Spinnvorgang der Glasfasern, müssen die unbrauchbaren Lösungen meist schon nach kurzer Zeit ausgetauscht und durch neue ersetzt werden; das zwingt zu einer aufwendigen Bevorratung der Lösungen und stellt einen beachtlichen Kostenfaktor dar. Zudem müssen die unbrauchbaren Lösungen aufwendig entsorgt werden.

Für die Herstellung insbesondere konzentrierterer Lösungen von 3-Methacryloxypropyltrialkoxysilanen sind unverhältnismäßig lange Lösezeiten bis zur Erreichung des Klarpunktes der Lösung erforderlich. Ferner ist es ein Mangel, daß bei wenig höheren Konzentrationen als 10 Gew.-% 3-Methacryloxypropyltrialkoxysilan überhaupt kein Klarpunkt mehr erreicht wird.

Für bestimmte Glasfaserschlichten, die neben dem Organosilan noch Filmbildner, Antistatika und Netzmittel enthalten, sind aber höhere Organosilankonzentrationen von Vorteil.

Der Erfindung lag daher die Aufgabe zugrunde, eine klare, wäßrige Auflösung eines organofunktionellen Silans bereitzustellen, wobei das Organosilan in Wasser oder dabei entstehende Reaktionsprodukte, d. h. monomere, oligomere oder auch polymere Hydrolysate bzw. Kondensate, in möglichst hoher Konzentration vorliegen soll, die Klarpunktzeit (KPZ) möglichst kurz ist und die Auflösungen möglichst lange Standzeiten (STZ) aufweisen, d. h. über einen längeren Zeitraum trübungsfrei bleiben.

Es wurde überraschenderweise gefunden, daß anstelle von 3-Methacryloxypropyltrialkoxysilanen die Verwendung von 3-Acryloxypropyltrialkoxysilanen für Wasser-haltige Organosilanauflösungen mit Eduktkonzentrationen von größer 10 bis hin zu 80 Gew.-%, bezogen auf das Gewicht der Auflösung, nicht nur hohe Löslichkeiten des eingesetzten Organosilans in Wasser bei vergleichsweise kurzen Klarpunktzeiten führt, sondern - und das ist hier für den Fachmann besonders überraschend - daß so hoch konzentrierte wäßrige Auflösungen solcher Organosilane auch eine vergleichweise lange Zeit beständig sind. Die genannten Prozentangaben beziehen sich dabei jeweils auf das Gewicht des monomeren Organosilans, das als Edukt für die Herstellung der Auflösung eingesetzt wurde, bezogen auf das Gewicht der gesamten Auflösung. Diese überraschenden Ergebnisse werden dadurch erzielt, daß man für die Herstellung von Auflösungen Acryl-funktionalisierter Organosilane der allgemeinen Formel I 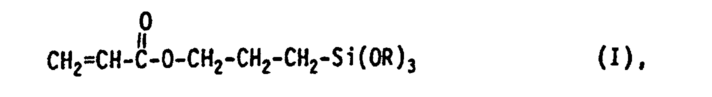 worin R eine Methyl- oder Ethylgruppe bedeutet, bei Einsatz von mehr als 10 Gew.-% und weniger als 65 Gew.-% an Organosilan, jeweils bezogen auf das Gewicht der Auflösung, diese in angesäuertem Wasser auflöst, d. h. angesäuertes Wasser vorlegt oder für die Herstellung hochkonzentrierter Auflösungen die Organosilane vorlegt und 35 bis 20 Gew.-% angesäuertes Wasser, bezogen auf das Gewicht der Auflösung, zusetzt. Im allgemeinen erfolgt die Herstellung solcher Auflösungen unter guter Durchmischung und Luftzutritt, d. h. die Herstellung kann an der Luft erfolgen. Geeigneterweise liegt der pH-Wert der Auflösungen im Bereich von 3 bis 5, vorzugsweise im Bereich pH 4 bis 4,5. Für das Ansäuern des Wassers wird vorzugsweise eine Carbonsäure verwendet. Die Klarpunktzeiten so erhältlicher wäßriger bzw. wäßriger/alkoholischer Auflösungen von Acryl-funktionalisierten Organosilanen der allgemeinen Formel I verkürzen sich in der Regel auf ein Drittel und die Standzeiten verlängern sich im allgemeinen auf das Vier- bis Fünffache der Zeiten, wie sie für marktgängige Methacryloxyalkylalkoxysilanauflösungen üblich sind.

Gegenstand der vorliegenden Erfindung sind daher Wasser-haltige Auflösungen von Acryl-funktionalisierten Organosilanen der allgemeinen Formel I 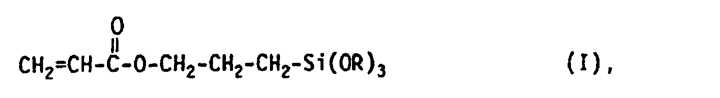 worin R eine Methyl- oder Ethylgruppe bedeutet,
mit einer Einsatzstoffkonzentration an Organosilan von größer 10 Gew.-%, insbesondere größer 15 Gew.-%, ganz besonders größer 25 Gew.-%, und kleiner 80 Gew.-% und einem Gehalt an Alkohol bis 10 Gew.-%. Bevorzugt sind die erfindungsgemäßen Auflösungen im wesentlichen alkoholfrei oder alkoholarm. Vorzugsweise beträgt der Gehalt an Alkohol 0,01 bis 10 Gew.-%, besonders vorzugsweise 0,1 bis 2 Gew.-%, bezogen auf das Gewicht der Auflösung, wobei hier unter Alkohol Methanol oder Ethanol oder deren Mischung verstanden wird.

Die erfindungsgemäßen Auflösungen enthalten im allgemeinen mindestens eine Carbonsäure, deren pKₛ-Wert vorzugsweise im Bereich 3,7 bis 5,0 liegt, beispielsweise Essigsäure, Propionsäure, Ameisensäure, Acrylsäure oder Methacrylsäure.

Bevorzugt besitzen die erfindungsgemäßen Auflösungen einen pH-Wert zwischen 3 und 5 und besonders vorzugsweise einen pH-Wert zwischen 3,5 und 4,5.

Gegenstand der vorliegenden Erfindung ist ferner ein Verfahren zur Herstellung von Wasser-haltigen Auflösungen Acryl-funktionalisierter Organosilane der allgemeinen Formel I 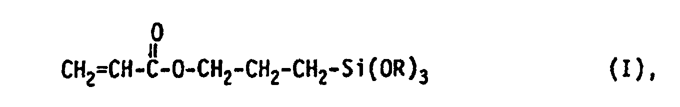 worin R eine Methyl- oder Ethylgruppe bedeutet,
das dadurch gekennzeichnet ist, daß man mehr als 10 Gew.-%, vorzugsweise mehr als 15 Gew.-%, besonders vorzugsweise mehr als 25 Gew.-%, und weniger als 65 Gew.-% an Organosilan, jeweils bezogen auf das Gewicht der Auflösung, in angesäuertem Wasser auflöst oder man für hochkonzentrierte Auflösungen die Organosilane vorlegt und 35 bis 20 Gew.-% angesäuertes Wasser, bezogen auf das Gewicht der Auflösung, zusetzt und man die Alkohole nahezu vollständig oder teilweise unter vermindertem Druck aus der Auflösung hinaus verdampft. Unter hochkonzentrierten Auflösungen sollen bei der vorliegenden Erfindung solche Auflösungen verstanden werden, für deren Herstellung zwischen 65 und 80 Gew.-% an Organosilan, bezogen auf das Gewicht der Auflösung, eingesetzt werden.

Beim erfindungsgemäßen Verfahren setzt man geeigneterweise angesäuertes Wasser mit einem pH-Wert zwischen 3 und 5, vorzugsweise mit einem pH-Wert zwischen 4 und 4,5, ein. Vorzugsweise wird das Wasser mit einer Carbonsäure, deren pKₛ-Wert im Bereich 3,7 bis 5,0 liegt, angesäuert, es können hierzu aber auch andere Säuren eingesetzt werden, beispielsweise auch anorganische Säuren wie Halogenwasserstoffsäuren, Schwefelsäure oder Phosphorsäure.

Geeigneterweise wird beim erfindungsgemäßen Verfahren die Auflösung unter Rühren hergestellt, vorzugsweise unter Luftzutritt.

Beim erfindungsgemäßen Verfahren liegen die Auflösezeiten (Klarpunktzeiten) in der Regel zwischen 40 Minuten und 12 Stunden.

Sollte es für verschiedene Applikationen notwendig sein, im wesentlichen alkoholfreie oder alkoholarme Auflösungen bereitzustellen, so kann man beim erfindungsgemäßen Verfahren die Alkohole, vorzugsweise Methanol oder Ethanol, nahezu vollständig oder auch nur teilweise unter vermindertem Druck aus der erfindungsgemäßen Auflösung heraus verdampfen.

Im allgemeinen geht man für die Herstellung Wasser-haltiger Auflösungen nach dem erfindungsgemäßen Verfahren so vor, daß man bei Einsatz von mehr als 10 Gew.-% und weniger als 65 Gew.-% Acryl-funktionalisierter Organosilane der allgemeinen Formel I zunächst angesäuertes Wasser vorlegt, den Organosilananteil zugibt und geeigneterweise bis zum Erhalt einer klaren Lösung gut durchmischt. Der Mischvorgang erfolgt im allgemeinen bei Raumtemperatur und unter Luftzutritt. Die Organosilane können portionsweise, z. B. tropfenweise oder auch in großen Portionen oder in einem Schuß in das vorgelegte angesäuerte Wasser gegeben werden. Bevorzugt erfolgt die Zugabe in großen Portionen. Die Auflösung der Organosilane in Wasser erfolgt im allgemeinen durch Hydrolyse, dabei können auch Kondensationsreaktionen auftreten. Die Hydrolyse der Organosilane erfolgt im allgemeinen unter Bewegung der Mischungen, vorzugsweise unter Verwendung eines Rührers, wobei das Rührwerk in der Regel vor der Organosilanzugabe in Gang gesetzt wird.

Beim erfindungsgemäßen Verfahren werden hochkonzentrierte Auflösungen, d. h. solche Auflösungen, für deren Herstellung 65 bis 80 Gew.-% Organosilane der allgemeinen Formel I eingesetzt werden, die Organosilane vorgelegt und 35 bis 20 Gew.-% angesäuertes Wasser, bezogen auf das Gewicht der gesamten Auflösung, zugesetzt. Geeigneterweise wird bis zum Erhalt einer klaren Auflösung gut durchmischt. Auch hier kann bei Raumtemperatur und unter Luftzutritt gearbeitet werden. Die Zugabe von angesäuertem Wasser zu der Organosilanvorlage erfolgt auch hier bevorzugt portionsweise sowie geeigneterweise unter Rühren.

Zur Stabilisierung gegen vorzeitige Polymerisation kann Sauerstoff oder ein sauerstoffhaltiges Gas hindurchgeperlt werden. Gegebenenfalls können zusätzliche Inhibitoren, vorzugsweise wasserlösliche Inhibitoren, eingebracht werden, - sofern diese die spätere Verwendung der Auflösungen nicht nachteilig beeinflussen. Geeignete Stabilisatoren sind beispielsweise Hydrochinon oder Hydrochinonmonomethylether.

In der Regel werden bei der Hydrolyse bzw. Kondensation der Organosilane der allgemeinen Formel I monomere, oligomere bzw. polymere Reaktionsprodukte gebildet und Alkohol R-OH freigesetzt, beispielsweise:

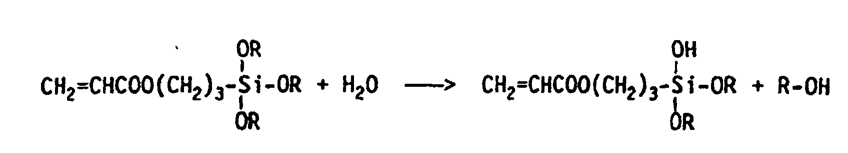

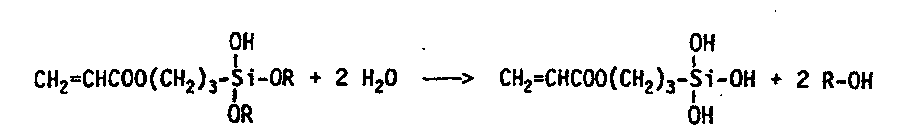

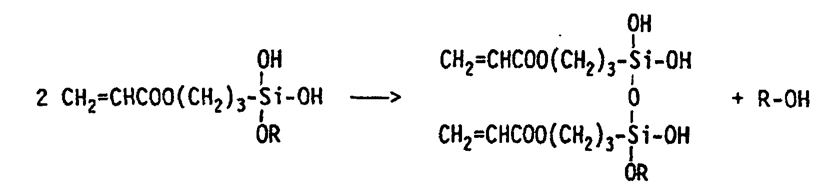

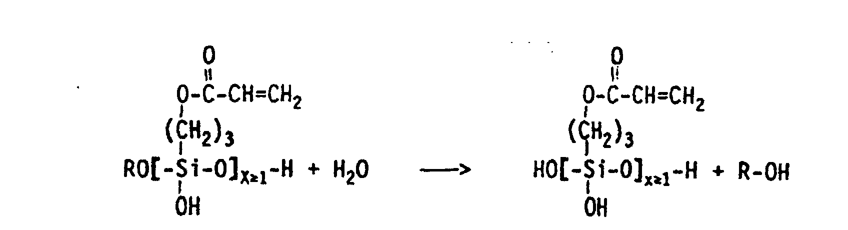

So oder ähnlich kann man sich hier Hydrolyse und Kondensation der Organosilane der allgemeinen Formel I modellhaft vorstellen.

Im allgemeinen treten dabei mit steigender Konzentration an eingesetztem Organosilan neben dem nicht zur Hydrolyse verbrauchten Wasser auch zunehmende Mengen von Alkohol als Cosolvens auf. Wasser und Alkohol können gleiche aber auch den jeweils überwiegenden Anteil des Lösemittels ausmachen. So überwiegt bei Auflösungen mit geringer Organosilaneinsatzkonzentration im allgemeinen der Wasseranteil im Lösemittel, bei hohen Organosilaneinsatzkonzentrationen der Alkoholanteil.

Beim erfindungsgemäßen Verfahren ist aber auch die Herstellung höher konzentrierter Auflösungen mit geringem Alkoholanteil möglich, indem der Alkoholanteil geeigneterweise unter reduziertem Druck, vorzugsweise bei möglichst niedriger Temperatur, verdampft wird. Um den Gehalt an monomeren, oligomeren bzw. polymeren Organosilan-haltigen Verbindungen in der Auflösung weitgeht konstant zu halten, kann beim Entfernen des Alkohols aus der Auflösung der Verlust an Lösemittel durch entsprechende Zugaben an Wasser, geeigneterweise angesäuertes Wasser, d. h. vorzugsweise unter Erhalt des in der Auflösung vorherrschenden pH-Wertes, ausgeglichen werden. Der Restanteil von Alkohol kann zwischen 0,01 bis 10 Gew.-%, bezogen auf die Gesamtauflösung, vorzugsweise zwischen 0,1 und 2 Gew.-%, betragen. Das Entfernen des Alkohols aus der Auflösung kann in jeder geeigneten vakuumfesten Apparatur vorgenommen werden. Der Arbeitsdruck kann zwischen 1 und 400 mbar abs. betragen, bevorzugt beträgt er zwischen 5 und 100 mbar abs.. Die Arbeitstemperatur kann entsprechend dem gewählten Druck 5 bis 40 °C, vorzugsweise 10 bis 30 °C, betragen.

Gegenstand der vorliegenden Erfindung ist auch die Verwendung einer Auflösung nach Anspruch 1 oder einer nach Anspruch 4 hergestellten Auflösung für das Finishing von Glasfasern sowie für die Herstellung von Glasfasern mit einer Schlichte.

Man kann die Organosilan-haltigen Verbindungen aus einer erfindungsgemäßen Auflösung auf Glasfasern oder daraus hergestellter Gebilde applizieren; diese können danach beispielsweise mit ungesättigten Harzen haftfest verbunden werden, wobei die Harzmasse geeigneterweise mindestens einen ungesättigten Polyester und/oder ein Acrylharz enthält. Sollte der Anwendungsfall es erfordern, können die erfindungsgemäßen Auflösungen durch Zusatz eines geeigneten Lösemittels verdünnt werden, beispielsweise ist Wasser, angesäuertes Wasser, Methanol, Ethanol oder ein anderer mit Wasser mischbarer Alkohol als Lösemittel geeignet.

Man kann die Organosilan-haltigen Verbindungen der erfindungsgemäßen Auflösungen beispielsweise aber auch auf metallischen und/oder silikatischen Oberflächen applizieren. So behandelte silikatische bzw. metallische Oberflächen weisen im allgemeinen im Verbund mit peroxidisch ausgehärteten ungesättigten Harzen die gleiche oder eine noch verbesserte Haftfestigkeit gegenüber mit entsprechenden Auflösungen von 3-Methacryloxypropyltrialkoxysilanen behandelten Oberflächen auf.

Es wurde weiter gefunden, daß aus den erfindungsgemäßen wäßrigen oder alkoholisch/wäßrigen Auflösungen von Organosilanen der allgemeinen Formel I auf silikatischen und/oder metallischen Oberflächen abgeschiedene Überzüge durch UV-Licht zu nahezu unlöslichen Gebilden vernetzt werden können.

Gegenstand der vorliegenden Erfindung ist somit auch die Verwendung einer Auflösung nach Anspruch 1 oder einer nach Anspruch 4 hergestellten Auflösung, die dadurch gekennzeichnet ist, daß die auf einer Oberfläche applizierten Organosilan-haltigen Verbindungen einer Auflösung durch UV-Licht vernetzt werden. - Durch Vernetzung mittels UV-Licht können so Überzüge oder Oberflächen oder Zwischenschichten, beispielsweise als Haftvermittler, erhalten werden; geeigneterweise sind so harte und weitgehend unlösliche Beschichtungen erhältlich.

Die erfindungsgemäßen Wasser-haltigen Auflösungen sind im allgemeinen klare Auflösungen mit guter Lagerungsbeständigkeit und können in einfacher Weise hergestellt werden.

Die Erfindung wird durch die nachfolgenden Beispiele näher erläutert:

### Beispiele:

### Beispiele 1 bis 4

Es wurden jeweils 250 g angesäuertes Wasser (pH-Wert: 4,5), das Essigsäure enthielt, vorgelegt, 3-Acryloxypropyltrimethoxysilan (ACMO) (44.1 g; 62,5 g; 83,3 g bzw. 217,9 g) unter Rühren bei Raumtemperatur und Luftzutritt in einem Schuß zugesetzt und bis zur völligen Klarheit der Lösung gelöst und KPZ und STZ der Auflösungen ermittelt. Die pH-Werte so hergestellter Auflösungen lagen im Bereich von 4,3 bis 4,5. Die Ergebnisse sind in Tabelle 1 aufgeführt, die Angaben in Gew.-% beziehen sich auf die Gesamtauflösung.

### Vergleichsbeispiele A bis D

Es wurden jeweils unterschiedliche Eduktmengen 3-Methacryloxypropyltrimethoxysilan (MEMO) in jeweils 250 g angesäuertem Wasser (pH 4,5), das Essigsäure enthielt, unter Rühren bei Raumtemperatur und Luftzutritt soweit wie möglich gelöst, KPZ und STZ wurden jeweils ermittelt. Die Ergebnisse sind ebenfalls der Tabelle 1 zu entnehmen, die Angaben in Gew.-% beziehen sich auch hier auf die Gesamtauflösung.

**Tabelle 1:**

| Beispiele | ACM0 [Gew.-%] | KPZ [min] | STZ [d] |
|---|---|---|---|
| 1 | 15 | 48 | 4,5 |
| 2 | 20 | 60 | 4,5 |
| 3 | 25 | 65 | 6,5 |
| 4 | 35 | 73 | 14,5 |

| Vergleichsbeispiele | MEMO [Gew.-%] | KPZ [min] | STZ [d] |
|---|---|---|---|
| A | 5 | 80 | 3,5 |
| B | 7 | 105 | 3 |
| C | 10 | 133 | 2 |
| D | 20 | nicht löslich; stark getrübte Lösung | |

### Beispiel 5

Es wurden 20 Gew.-%ige Auflösungen von 3-Acryloxypropyltrimethoxysilan (ACMO) in Wasser bei unterschiedlichen pH-Werten unter Verwendung von Essigsäure hergestellt und die Klarpunktzeit (KPZ) und die Standzeit (STZ) in Abhängigkeit vom pH-Wert bestimmt. Die Ergebnisse sind in Tabelle 2 aufgeführt.

**Tabelle 2:**

| pH-Wert des Hydrolysemediums | KPZ [min] | STZ [d] |
|---|---|---|
| 2,5 | 13 | 0,2 |
| 3,0 | 15 | 0,8 |
| 3,5 | 18 | 2,8 |
| 4,0 | 36 | 4,5 |
| 4,5 | 60 | 4,2 |
| 5,0 | 64 | 3,7 |

### Beispiel 6

In einem 250 ml Becherglas wurden bei Raumtemperatur und unter Luftzutritt 21 g 3-Acryloxypropyltriethoxysilan (ACEO) unter Rühren zu 179 g Wasser mit einem pH-Wert von 3,5 (Essigsäure) hinzugegeben. Nach 2 Stunden war eine klare Lösung entstanden, die rund 3 ½ Tage trübungsfrei blieb.

### Vergleichsbeispiel E

In einem 250 ml Becherglas wurden bei Raumtemperatur und unter Luftzutritt 21 g 3-Methacryloxypropyltriethoxysilan (MEEO) unter Rühren zu 179 g Wasser mit einem pH-Wert von 3,5 (essigsäurehaltig) hinzugegeben. Nach 2 Tagen Rührdauer war die Mischung noch stark getrübt.

### Beispiel 7

In einem 250 ml Becherglas wurden bei Raumtemperatur und unter Luftzutritt 125 g 3-Acryloxypropyltrimethoxysilan (ACMO) unter Rühren zu 125 ml Wasser mit einem pH-Wert von 4,0 (essigsäurehaltig) schnell hinzugegeben. Nach 1,4 Stunden war eine klare Lösung entstanden. Diese wurde in einen Rundkolben, der mit Thermometer, Glaskapillare, Claisenbrücke und einer mit Trockeneis gekühlten Vorlage versehen war, eingefüllt, und das Methanol durch Verminderung des Druckes (15 mbar) und Einperlen von Luft, bei einer Kolbeninnentemperatur von 25 °C, verdampft. Nach 2 Stunden konnte durch GC-Analyse in der im Kolben verbliebenen Auflösung ein Methanol-Gehalt von < 0,3 % festgestellt werden. Die wäßrige Auflösung des Organosilans blieb länger als 24 Stunden trübungsfrei.

### Beispiel 8

In einem 250 ml Becherglas wurden bei Raumtemperatur und unter Luftzutritt 160 g 3-Acryloxypropyltrimethoxysilan (ACMO) vorgelegt und unter schneller Zugabe von 40 g Wasser mit einem pH-Wert von 4,0 (essigsäurehaltig) mittels Rühraggregat gemischt. Nach 10 Stunden war eine klare Auflösung entstanden. Die Auflösung blieb länger als 180 Tage trübungsfrei.

### Vergleichsbeispiel F

Eine in einem 250 ml Becherglas gerührte Mischung aus 160 g 3-Methacryloxypropyltrimethoxysilan (MEMO) und 40 g Wasser mit einem pH-Wert von 4,0 (essigsäurehaltig) ergab nach 2 Tagen Rührdauer keine klare, homogene Auflösung. Nach Abschaltung des Rührwerkes trennten sich die Phasen sofort wieder.

### Beispiel 9

50 ml der in Beispiel 8 hergestellten Lösung wurden mit 10 ml Methanol (chemisch rein) verdünnt und nach Zusatz von 35 mg Benzoin ein fett- und staubfreier Objektträger eingetaucht, der nach kurzer Abtropfdauer (Neigungswinkel 45°) für einen Tag an der Luft und anschließend für eine Stunde im Vakuum von 1 mbar bei bis zu 50 °C unter Stickstoff getrocknet wurde. Die so behandelte Glasplatte wurde in einem Belichtungskasten unter einer Stickstoffatmosphäre mit einer Quecksilberlampe (Typ Q 400 der Firma Original Hanau Quarzlampen) für 0,5 Stunden bestrahlt (Lampenabstand vom Objektträger: 30 cm). Nach dieser Methode konnte beispielsweise die Oberfläche des Objektträgers mit einem klebfreien und weitgehend kratzfesten Überzug versehen werden.

### Vergleichsbeispiel G

Ein fett- und staubfreier Objektträger wurde mit einer unverdünnten, wäßrigen 3-Methacryloxysilan-Auflösung gemäß Vergleichsbeispiel C, die zusätzlich 0,05 Gew.-% Benzoin, bezogen auf eingesetztes Silan, enthielt, behandelt und nach kurzer Abtropfdauer und nach eintägiger Lufttrocknung für eine Stunde im Vakuum von 1 mbar bei bis zu 50 °C unter Stickstoff nachbehandelt. Anschließend wurde er in einem Lichtkasten unter einer Stickstoffatmosphäre mit einer Quecksilberlampe des Typs Q 400 für 0,5 Stunden bestrahlt, wobei der Abstand zwischen Objektträger und Lichtquelle 30 cm betrug. Der Überzug auf der Objektträgeroberfläche war danach noch weich und klebrig.

### Beispiel 10

Ein staub- und fettfreier Objektträger wurde mit einer wäßrigen, 3 Tage alten Auflösung von 3-Acryloxypropyltrimethoxysilan (ACMO) aus Beispiel 1 behandelt und nach 1tägiger Lufttrocknung und anschließender 1stündiger Trocknung im Vakuumtrockenschrank mittels einer Rakel eine 1 mm dicke styrolhaltige UP-Harzschicht (PALATAL® A 410, Handelsprodukt der BASF), das auf 100 g Harz 2 g Kobaltoctoat und 1 g Acetylacetonperoxid enthielt, aufgetragen. Nach einer Stunde Lagerung unter einer CO₂-Atmosphäre wurde der beschichtete Objektträger 2 Stunden bei 100 °C thermisch nachbehandelt. Nach 1stündigem Kochtest trat keine Trennung von Harzschicht und Glas auf.

### Vergleichsbeispiel H

Ein staub- und fettfreier Objektträger wurde mit einer wäßrigen, 3 Tage alten, eingetrübten Auflösung von 3-Methacryloxypropyltrimethoxysilan-Lösung aus Vergleichsbeispiel C behandelt und nach 1tägiger Luftrocknung und anschließender 1stündiger Trocknung im Vakuumtrockenschrank mittels einer Rakel eine 1 mm dicke styrolhaltige UP-Harzschicht (PALATAL® A 410, Handelsprodukt der BASF), das auf 100 g Harz 2 g Kobaltoctoat und 1 g Acetylacetonperoxid enthielt, aufgetragen. Nach einer Stunde Lagerung unter einer CO₂-Atmosphäre wurde der beschichtete Objektträger 2 Stunden bei 100 °C thermisch nachbehandelt. Bei der Behandlung des Probestückes in siedendem Wasser löste sich die Harzschicht vom Glas bereits nach wenigen Minuten.

### Definitionen

Die Klarpunktzeit (KPZ) wird ab Beginn der Mischung von Wasser und Silan bis zur trübungsfreien Auflösung gemessen. Die Standzeit (STZ) der Lösung wird ab Beginn des Klarpunktes bis zur Eintrübung der Auflösung gemessen. Die Auflösung gilt als trübe, wenn eine hinter das Gefäß mit einem Gefäßdurchmesser von 8 bis 10 cm gehaltene Buchseite nicht mehr lesbar ist.

## Patentansprüche

1. Wasser-haltige Auflösungen von Acryl-funktionalisierten Organosilanen der allgemeinen Formel I 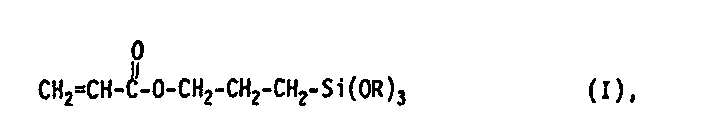 worin R eine Methyl- oder Ethylgruppe bedeutet,
mit einer Einsatzstoffkonzentration an Organosilan von größer 10 Gew.-% und kleiner 80 Gew.-% und einem Gehalt an Alkohol bis 10 Gew.-%.

2. Wasser-haltige Auflösungen von Acryl-funktionalisierten Organosilanen nach und man die Alkohole nahe zu vollstanding oder teilweise unter vermindertem Druck aus der Auflösung heraus verdampft Anspruch 1,
**dadurch gekennzeichnet,**
**daß** eine Auflösung mindestens eine Carbonsäure enthält.

3. Wasser-haltige Auflösungen von Acryl-funktionalisierten Organosilanen nach den Ansprüchen 1 bis 2,
**gekennzeichnet durch**
einen pH-Wert zwischen 3 und 5.

4. Verfahren zur Herstellung von Wasser-haltigen Auflösungen Acryl-funktionalisierter Organosilane nach Anspruch 1,
**dadurch gekennzeichnet,**
**daß** man mehr als 10 Gew.-% und weniger als 65 Gew.-% an Organosilan, jeweils bezogen auf das Gewicht der Auflösung, in angesäuertem Wasser auflöst oder man für hochkonzentrierte Auflösungen ein Organosilan vorlegt und 35 bis 20 Gew.-% angesäuertes Wasser, bezogen auf das Gewicht der Auflösung, zusetzt.

5. Verfahren nach Anspruch 4,
**dadurch gekennzeichnet,**
**daß** angesäuertes Wasser mit einem pH-Wert zwischen 3 und 5 eingesetzt wird.

6. Verfahren nach den Ansprüchen 4 und 5,
**dadurch gekennzeichnet,**
**daß** das Wasser mit einer Carbonsäure, deren pKₛ-Wert im Bereich 3,7 bis 5,0 liegt, angesäuert wird.

7. Verfahren nach den Ansprüchen 4 bis 6,
**dadurch gekennzeichnet,**
**daß** die Auflösung unter Rühren hergestellt wird.

8. Verfahren nach den Ansprüchen 4 bis 7,
**dadurch gekennzeichnet,**
**daß** die Auflösung unter Luftzutritt hergestellt wird.

9. Verfahren nach den Ansprüchen 4 bis 8,
**gekennzeichnet durch**
Auflösezeiten (Klarpunktzeiten) zwischen 40 Minuten und 12 Stunden.

10. Verwendung einer Auflösung nach Anspruch 1 oder einer nach Anspruch 4 hergestellten Auflösung für das Finishing von Glasfasern sowie für die Herstellung von Glasfasern mit einer Schlichte.

11. Verwendung einer Auflösung nach Anspruch 1 oder einer nach Anspruch 4 hergestellten Auflösung,
**dadurch gekennzeichnet,**
**daß** die auf einer Oberfläche applizierten Organosilan-haltigen Verbindungen einer Auflösung durch UV-Licht vernetzt werden.

12. Überzüge oder Oberflächen oder Zwischenschichten, die gemäß Anspruch 11 erhältlich sind.

## Claims

1. A water-containing solution of acrylic-functionalized organosilane of the general formula I 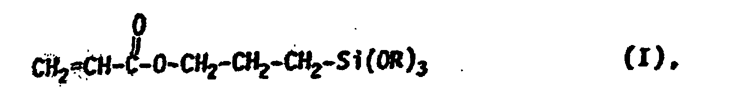 in which R is a methyl or ethyl group,
having a starting-material concentration of organosilane of more than 10% by weight and less than 80% by weight and an alcohol content of up to 10% by weight.

2. A water-containing solution of acrylic-functionalized organosilane according to claim 1, **characterized in that** a solution contains at least one carboxylic acid.

3. A water-containing solution of acrylic-functionalized organosilane. according to either of claims 1 and 2, **characterized by** a pH of from 3 to 5.

4. A process for the preparation of water-containing solutions of acrylic-functionalized organosilanes according to claim 1, **characterized in that** more than 10% by weight and less than 65% by weight of organosilane, based in each case on the weight of the solution, is dissolved in acidified water or, for highly concentrated solutions, an organosilane is initially introduced and from 35 to 20% by weight of acidified water is added, based on the weight of the solution, and the alcohols are evaporated out of the solution almost completely or partially, under reduced pressure.

5. A process according to claim 4, **characterized in that** acidified water with a pH of from 3 to 5 is employed.

6. A process according to either of claims 4 and 5, **characterized in that** the water is acidified with a carboxylic acid whose pKₐ is in the range from 3.7 to 5.0.

7. A process according to any of claims 4 to 6, **characterized in that** the solution is prepared with stirring.

8. A process according to any of claims 4 to 7, **characterized in that** the solution is prepared with the ingress of air.

9. A process according to any of claims 4 to 8, **characterized by** dissolving times (clear point times) of from 40 minutes to 12 hours.

10. The use of a solution according to claim 1 or of a solution prepared according to claim 4 for the finishing of glass fibres and for the preparation of glass fibres with a size.

11. The use of a solution according to claim 1 or of a solution prepared according to claim 4, **characterized in that** the organosilane-containing compounds of a solution, applied to a surface, are crosslinked by means of UV light.

12. A coating or surface or intermediate layer which is obtainable according to claim 11.

## Revendications

1. Solutions contenant de l'eau d'organosilanes fonctionnalisés par un groupe acryle de formule générale I 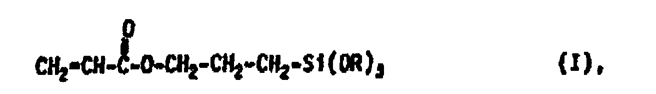 dans laquelle R signifie un groupe méthyle ou éthyle, ayant une concentration de substance de charge, en organosilane supérieure à 10 % en poids et inférieure à 80 % en poids et ayant une teneur en alcool allant jusqu'à 10 % en poids.

2. Solutions contenant de l'eau d'organosilanes fonctionnalisés par un groupe acryle selon la revendication 1,
**caractérisées en ce qu'**
une solution renferme au moins un acide carboxylique.

3. Solutions contenant de l'eau d'organosilanes fonctionnalisés par un groupe acryle selon l'une quelconque des revendications 1 ou 2,
**caractérisées par**
une valeur de pH comprise entre 3 et 5.

4. Procédé de préparation de solutions contenant de l'eau, d'organosilanes fonctionnalisés par un groupe acryle, selon la revendication 1,
**caractérisé en ce qu'**
on ajoute plus de 10 % en poids et moins de 65 % en poids d'organosilane, à chaque fois rapporté au poids de la solution, dissout dans de l'eau acidifiée, ou on introduit pour des solutions hautement concentrées un organosilane et on ajoute de 35 à 20 % en poids d'eau acidifiée rapporté au poids de la solution, et on chasse par évaporation à peu prés complètement ou partiellement, sous pression réduite, les alcools de la solution.

5. Procédé selon la revendication 4,
**caractérisé en ce qu'**
on met en oeuvre de l'eau acidifiée ayant une valcur de pH comprise entre 3 et 5.

6. Procédé selon l'une quelconque des revendications 4 et 5,
**caractérisé en ce que**
l'eau est acidifiée avec un acide carboxylique dont la valeur de pKₛ se situe dans la zone de 3,7 à 5,0.

7. Procédé selon l'une quelconque des revendications 4 à 6,
**caractérisé en ce que**
la solution est préparée sous agitation.

8. Procédé selon l'une quelconque des revendications 4 à 7,
**caractérisé en ce que**
la solution est préparée sous amenée d'air.

9. Procédé selon l'une quelconque des revendications 4 à 8,
**caractérisé par**
des temps de dissolution (temps de point de limpidité) compris entre 40 minutes et 12 heures.

10. Utilisation d'une solution selon la revendication 1 ou d'une solution préparée selon la revendication 4, pour le finissage des fibres de verre ainsi que pour la production de fibres de verre ayant un ensimage.

11. Utilisation d'une solution selon la revendication 1 ou d'une solution préparée selon la revendication 4,
**caractérisée en ce que**
les composés d'une solution contenant un organosilane appliqués sur une surface sont réticulés par la lumière UV.

12. Revêtements ou surfaces ou couches intermédiaires, accessibles conformément à la revendication 11.
